# EUROPÄISCHE PATENTANMELDUNG

(11) **EP 1 892 942 A2**
(43) Veröffentlichungstag der Anmeldung: **27.02.2008**
(21) Anmeldenummer: 07016533.7
(22) Anmeldetag: 23.08.2007
(51) Int. Cl.: H04N 1/00

(54) **Verfahren zur Funktionserweiterung von digitalen Fernsehempfangsgeräten**

(30) Priorität: 24.08.2006 DE 102006039763
(71) Anmelder: TechnoTrend AG, 99092 Erfurt (DE)
(72) Erfinder: Franke, Volker, 99510 Apolda (DE); Pauli, Michael, 04105 Leipzig (DE); Sever, Frank, 99099 Erfurt (DE); Köthe, Frank, 99610 Sömmerda (DE)
(74) Vertreter: Stern, Wolfgang

(57) **Zusammenfassung**

Die Erfindung betrifft ein Verfahren zur Funktionserweiterung von digitalen Fernsehempfangsgeräten. Die Funktionserweiterung ermöglicht interaktive Anwendungen und/oder die Weiterleitung der empfangenen Video-, Audio- und auch Datensignale an zusätzliche Wiedergabegeräte. Gemäß der Erfindung wird einer der beiden vorhandenen SCART-Anschlüsse der Set-Top-Box, so modifiziert, dass die normale Funktion des SCART-Anschlusses der Set-Top-Box beim Anschluss herkömmlicher Heimelektronik nicht beeinträchtigt wird.

## Beschreibung

Die Erfindung betrifft ein Verfahren zur Funktionserweiterung von digitalen Fernsehempfangsgeräten nach dem Oberbegriff des Patentanspruchs 1. Die Funktionserweiterung ermöglicht interaktive Anwendungen und/oder die Weiterleitung der empfangenen Video-, Audio- und auch Datensignale an zusätzliche Wiedergabegeräte.

### Stand der Technik

Digitale Fernsehempfangsgeräte für den europäischen Markt sind zum überwiegenden Teil als so genannte Set-Top-Boxen realisiert, die in der Nähe des Wiedergabegerätes, normalerweise einem herkömmlichen Fernsehgerät mit Bildröhre oder einem modernen Plasma- oder LCD-Display, platziert werden. Der Anschluss zwischen Set-Top-Box und Fernsehgerät wird über einen 21-poligen SCART-Anschluss hergestellt. Über diesen werden die dekodierten, analogen Video- und Audiosignale zum Wiedergabegerät übertragen. Des Weiteren verfügen viele Set-Top-Boxen über einen zweiten SCART-Anschluss, beispielsweise zum Anschluss eines herkömmlichen Videokassetten-, Festplatten- oder DVD-Rekorders.

Digitale Set-Top-Boxen sind nicht nur einfache, zusätzliche Tuner zum Demodulieren und Dekodieren digital gesendeter Fernsehprogramme. So wird neben Fernsehprogrammen auch eine große Anzahl von Radioprogrammen digital übertragen. Des Weiteren werden programmbegleitende Zusatzinformationen zusammen mit den Fernseh- und Radioprogrammen übertragen. Einige Anwendungen benutzen die digitale Fernsehtechnik ausschließlich zur Übertragung von Datendiensten.

Marktüblich sind inzwischen auch Set-Top-Boxen mit doppelten Tuner- und Demodulationseinheiten. Damit ist es zum Beispiel möglich, die Audio- und Videosignale eines Rundfunk- oder Fernsehprogramms über den ersten SCART-Anschluss zum Wiedergabegerät weiterzuleiten, während die Audio- und Videosignale eines zweiten Rundfunk- oder Fernsehprogramms über den zweiten SCART-Anschluss an einem angeschlossenen Videokassettenrekorder zum Zwecke der Aufzeichnung ausgegeben werden.

Es besteht nun der Bedarf, das umfangreiche Angebot an Fernseh- und Radioprogrammen sowie Datendiensten auch anderen Endgeräten zur Verfügung zu stellen, ohne aufwändige Änderungen an den Set-Top-Boxen im Sinne zusätzlicher elektrischer Komponenten und Anschlüsse selbst vorzunehmen. Dabei sollen zum Transport der Audio- und Videosignale verschiedene digitale Übertragungsmedien zum Einsatz kommen, die auch eine bidirektionale Kommunikation mit der Set-Top-Box ermöglichen.

Die WO 97/36421 betrifft eine Lösung ausschließlich zum Datenaustausch zwischen einem TV-Gerät und einem Zusatzgerät über eine SCART-Verbindung, insbesondere zum Update der Firmware des TV-Gerätes, wobei der Datenaustausch manuell aktiviert werden muss.

Gegenstand der EP 1 367 821 ist die Verwendung der Kontakte eines SCART-Anschlusses einer Set-Top-Box zum Zwecke der seriellen Datenkommunikation mit einem externen Gerät, jedoch ohne automatische Erkennung des angeschlossenen Gerätes und ohne die Möglichkeit der Stromversorgung des externen Gerätes über die SCART-Verbindung.

Die EP 1 045 584 A2 beschreibt eine Schaltung, um im stromlosen Zustand der Set-Top-Box trotzdem eine rudimentäre Durchleitung von Audio-Video-Signalen von einem SCART-Anschluss der Set-Top-Box zum anderen zu gewährleisten.

### Aufgabenstellung

Es ist daher Aufgabe der Erfindung, eine Lösung zu schaffen, die über einen vorhandenen SCART-Anschluss, vorzugsweise den Zweiten, auf einfache Weise den Anschluss spezieller externer Geräte ermöglicht. Bei diesen Geräten soll es sich auch um sehr kompakt aufgebaute Geräte handeln können, welche über keine eigene Stromversorgung verfügen müssen, sondern nach Möglichkeit ausschließlich über den SCART-Anschluss mit elektrischer Energie versorgt werden. Des Weiteren sollen die externen Geräte nicht nur die Audio- und Videosignale der Set-Top-Box empfangen, weiterverarbeiten und weiterleiten, sondern vor allem über Mittel zur Daten- und Steuerkommunikation mit der Set-Top-Box verfügen. Bei bestimmten Anwendungen ist ausschließlich die Daten- und Steuerkommunikation vorgesehen.

Diese Aufgabe wird durch ein Verfahren mit den Merkmalen des Patentanspruchs 1 gelöst. Vorteilhafte Ausgestaltungen der Erfindung sind in den Unteransprüchen angegeben. Gemäß der Erfindung wird einer der beiden vorhandenen SCART-Anschlüsse der Set-Top-Box, vorzugsweise der Zweite, entsprechend modifiziert. Damit wird gleichzeitig spezifiziert, wie der SCART-Anschluss eines speziellen externen Gerätes ausgeführt werden muss, um mit einer entsprechend modifizierten Set-Top-Box erfindungsgemäß funktionieren zu können.

Ein wesentlicher Vorteil der erfindungsgemäßen Lösung besteht darin, dass die normale Funktion des SCART-Anschlusses der Set-Top-Box beim Anschluss herkömmlicher Heimelektronik nicht beeinträchtigt wird. Dazu werden in der Set-Top-Box und in den externen speziellen Geräten geeignete Mittel verwendet, die eine automatische Erkennung bzw. Unterscheidung der externen Geräte von herkömmlicher Heimelektronik ermöglichen. Ein weiterer Vorteil besteht in der Möglichkeit, die Stromversorgung des speziellen externen Gerätes automatisch über die SCART-Anschlüsse zu realisieren.

### Ausführungsbeispiel

Im Folgenden soll die Erfindung anhand eines Ausführungsbeispiels näher erläutert werden.

Es zeigen:
- Fig. 1: ein Blockschaltbild zur Durchführung des Verfahrens
- Fig. 2: in einer detaillierten Darstellung die Verwendung eines Bluetooth-Adapters als externes Gerät

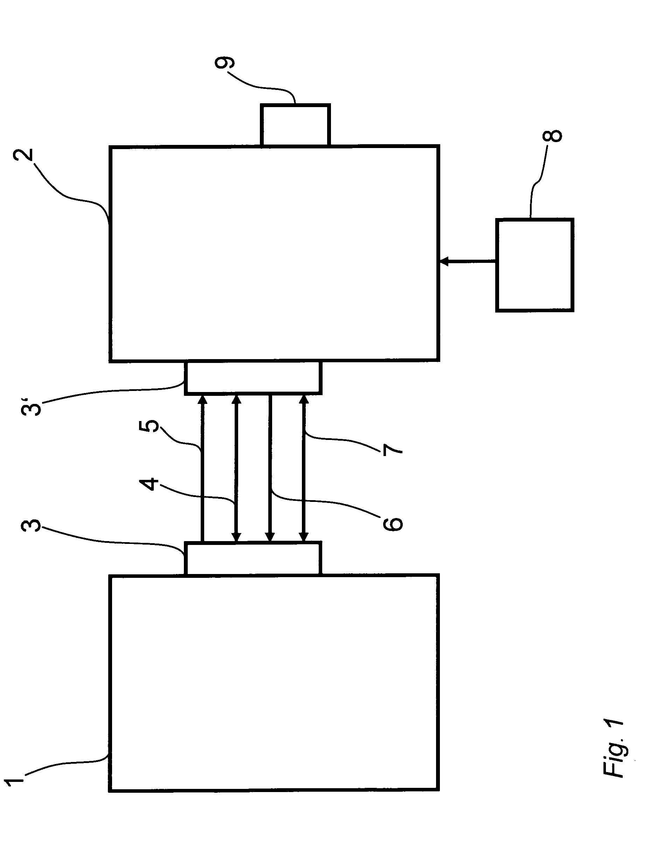

Im Ausführungsbeispiel nach Fig. 1 ist gemäß der Erfindung ein Bluetooth-Adapter 2 als externes spezielles Gerät mittels seiner SCART-Verbindung 3' an die SCART-Verbindung 3 der Set-Top-Box 1 angeschlossen. Die Aufgabe des Bluetooth-Adapters 2 ist es, die auf den SCART-Kontakten/Leitungen 5 anliegenden Audiosignale der Set-Top-Box 1 zusammen mit den über die SCART-Kontakte/Leitungen 4 realisierte serielle Datenverbindung empfangenen Zusatzdaten drahtlos über eine Bluetooth-Antenne 9 an ein nicht dargestelltes Bluetooth-Endgerät zu übertragen. Die Zusatzdaten sollen auf dem Bluetooth-Endgerät grafisch oder in Textform zur Anzeige gebracht werden. Des Weiteren sollen in der Gegenrichtung vom Bluetooth-Endgerät über den mittels SCART-Verbindung 3, 3' angeschlossenen Bluetooth-Adapter 2 Steuerinformationen an die Set-Top-Box 1 übertragen werden, um beispielsweise einen Kanalwechsel in der Set-Top-Box 1 durchzuführen.

Es wird ein SCART-Kontakt 7 benutzt, um es der Set-Top-Box 1 zu ermöglichen, zu erkennen, ob der Bluetooth-Adapter 2 angeschlossen ist und diesen gleichzeitig mit elektrischer Energie zu versorgen. Ein weiterer SCART-Kontakt 6 wird vom Bluetooth-Adapter 2 benutzt, um seine Betriebsbereitschaft zu signalisieren. Falls die von der Set-Top-Box 1 über den SCART-Kontakt 7 bereitgestellte Energie nicht zum Betrieb des Bluetooth-Adapters 2 ausreicht, kann dieser zusätzlich von einer optionalen zusätzlichen Spannungsversorgung 8, wie z.B. Netzspannungs-Adapter, Batterie oder Akku, gespeist werden.

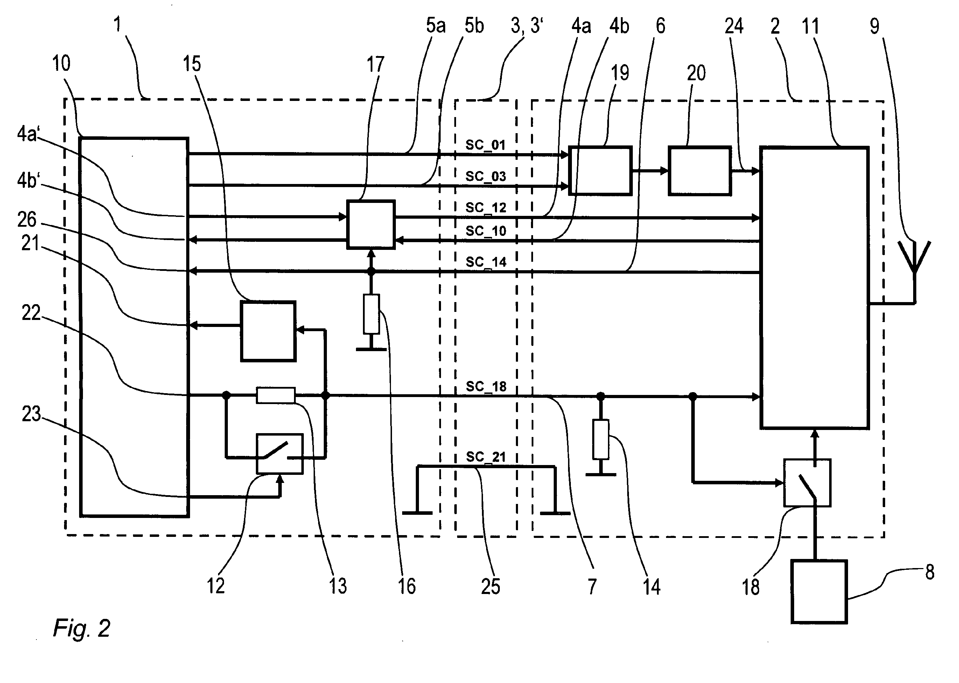

Fig. 2 soll als Gesamtschaltbild die Wirkungs- und Arbeitsweise der Erfindung verdeutlichen. Zum besseren Verständnis und in Bezug zu Fig. 1 sind die Elemente des Gesamtschaltbilds in gestrichelten Blöcken gruppiert, nämlich Set-Top-Box 1, Bluetooth-Adapter 2 als spezielles externes Gerät und die SCART-Verbindungen 3, 3'.

Die Elemente der 21-poligen SCART-Verbindungen 3, 3' sind die einzelnen im Sinne der Erfindung benutzten Pins. SC_01 steht für den Pin 1, SC_02 für den Pin 2 usw. Die in Fig. 2 nicht angeführten (da für das Ausführungsbeispiel nicht relevanten) SCART-Pins sind auf Seite der Set-Top-Box 1 an der SCART-Verbindung 3 in üblicher Weise beschaltet, auf Seite des Bluetooth-Adapters 2 werden sie an der SCART-Verbindung 3' nicht angeschlossen.

Die Ausführung des Bluetooth-Adapters 2 kann aber auch in der Art erfolgen (nicht dargestellt), dass alle Leitungen auf einen zweiten SCART-Anschluss geführt werden, an dem ein weiteres herkömmliches Gerät, wie zum Beispiel ein Videorecorder angeschlossen werden kann.

Auf die Standardelektronik 10 der Set-Top-Box 1 soll nur soweit es im Sinne der Erfindung notwendig ist eingegangen werden. Diese verfügt üblicherweise über einen programmgesteuerten Mikroprozessor als zentrales Steuergerät. Für die Erfindung wichtig ist, dass dieser Mikroprozessor eine bidirektionale serielle Schnittstelle in Form der Kontakte 4a', 4b', zwei freie logische Signaleingänge 21, 26 und einen freien logischen Signalausgang 23 bereitstellt. Des Weiteren stellt die Standardelektronik 10 der Set-Top-Box 1 eine von ihrer Betriebsspannung abgeleitete definierte Gleichspannung 22 bereit.

Die Standardelektronik 10 stellt die linken und rechten analogen Audioausgangsignale 5a, 5b an der SCART-Verbindung 3 der Set-Topp-Box 1 in bekannter Weise bereit.

Im Folgenden soll die Funktionsweise der Erfindung detailliert erläutert werden, was auch eine geeignete Anpassung der Programmsteuerung der Set-Top-Box 1 voraussetzt. Entsprechend erfolgen an den gegebenen Stellen der Erläuterung Hinweise wie diese Programmanpassung zu erfolgen hat, ohne jedoch auf Einzelheiten einzugehen. Es wird gewissermaßen nur der für die Erfindung relevante Rahmen dieser Anpassung vorgegeben.

Als erstes muss die Set-Top-Box 1 erkennen, ob überhaupt ein Bluetooth-Adapter 2 angeschlossen ist. Zu diesem Zweck wird ausgehend von der definierten Gleichspannung 22 über einen mittelohmigen Referenzwiderstand R_{R} 13 eine definierte Spannung auf den SCART-Kontakt 7 gelegt. Gleichzeitig ist dieser SCART-Kontakt 7 mit dem hochohmigen Eingang eines Fensterkomparators 15 verbunden. Dieser Fensterkomparator 15 ist so eingestellt, dass er nur dann eine logische 1 an dem Signaleingang 21 "externes Gerät ist angeschlossen" der Standardelektronik 10 signalisiert, wenn die Eingangsspannung am SCART-Kontakt 7 in einem definierten Bereich liegt, beispielsweise zwischen 1/3 und 2/3 der definierten Gleichspannung 22. Des Weiteren ist im Grundzustand der steuerbare Schalter 12 geöffnet.

Solange kein externes Gerät an der SCART-Verbindung 3 angeschlossen ist, findet über den Referenzwiderstand R_{R} 13 praktisch kein Spannungsabfall statt, es liegen dann 3/3 der definierten Gleichspannung 22 am Eingang des Fensterkomparators 15 an, dieser signalisiert damit logisch 0 am Signaleingang 21 der Standardelektronik. Dies trifft auch zu, wenn z.B. ein handelsüblicher Videorecorder an der SCART-Verbindung 3 der Set-Top-Box 1 angeschlossen ist. In diesem Fall ist der betreffende SCART-Kontakt 7 mit Masse verbunden, die dementsprechende Eingangsspannung von 0 V bewirkt ebenfalls die Signalisierung von logisch 0 am Signaleingang 21 der Standardelektronik 10.

Wird nun der Bluetooth-Adapter 2 angeschlossen, bewirkt dieser durch die entstehende Reihenschaltung von Referenzwiderstand R_{R} 13 und dem im Widerstandswert ungefähr gleich großen Detectionswiderstand R_{D} 14 des Bluetooth-Adapters 2 einen definierten Spannungsabfall über Referenzwiderstand R_{R} 13, so dass am Eingang des Fensterkomparators 15 eine Spannung mit einem Wert zwischen 1/3 und 2/3 der definierten Gleichspannung 22 anliegt. Der Fensterkomparator 15 signalisiert nun logisch 1 am Signaleingang 21 der Standardelektronik 10.

Die Programmsteuerung der Standardelektronik 10, die ständig den Signaleingang 21 überwacht, erkennt diese Zustandsänderung und reagiert nun, in dem sie über den Signalausgang 23 den steuerbaren Schalter 12 schließt und damit die volle Gleichspannung zur Versorgung des Bluetooth-Adapters 2 über den SCART-Kontakt 7 bereitstellt. Im weiteren Verlauf braucht die Programmsteuerung den Signaleingang 21 nicht mehr überwachen, stattdessen muss jetzt der Signaleingang 26 "externes Gerät ist betriebsbereit" überwacht werden.

Das Bereitstellen der vollen Betriebsspannung am SCART-Kontakt 7 für das Bluetooth Steuer- und Sende/Empfangsmodul 11 bewirkt dessen Initialisierung. Ist diese abgeschlossen, wird dies durch logisch 1 am SCART-Kontakt 6 "externes Gerät betriebsbereit" signalisiert. Dies bewirkt einerseits ein direktes Öffnen der Torschaltung 17 um die bidirektionale serielle Kommunikation zwischen Bluetooth-Adapter 2 und Set-Top-Box 1 physisch zu ermöglichen, zum anderen erkennt die Programmsteuerung nun, dass der Bluetooth-Adapter 2 betriebsbereit ist. Der mittelohmige Pulldown-Widerstand R_{P} 16 erzeugt eine stabile logische 0 auf SCART-Kontakt 6 "externes Gerät betriebsbereit", solange kein externes Gerät an der SCART-Verbindung 3 angeschlossen ist.

Die Programmsteuerung muss im Folgenden am SCART-Kontakt 6 das Signal "externes Gerät betriebsbereit" überwachen. Solange dieses Signal auf logisch 1 steht, kann davon ausgegangen werden, dass der Bluetooth-Adapter 2 ordnungsgemäß arbeitet. Geht dieses Signal auf logisch 0, ist davon auszugehen, dass der Bluetooth-Adapter 2 entweder ausgeschaltet oder abgezogen wurde, dementsprechend muss der steuerbare Schalter 12 geöffnet werden und die Set-Top-Box 1 in den Grundzustand versetzt werden (Bluetooth-Adapter 2 nicht angeschlossen).

Das Bereitstellen der vollen Betriebsspannung am SCART-Kontakt 7 für das Bluetooth Steuer- und Sende/Empfangsmodul 11 kann auch zum Schließen des steuerbaren Schalters 18 benutzt werden, um den Bluetooth-Adapter 2 mit zusätzlicher elektrischer Energie durch die optionale zusätzliche Spannungsversorgung 8 zu versorgen. Diese Vorgehensweise hat außerdem den Vorteil, dass kein extra Schalter für diese optionale zusätzliche Spannungsversorgung 8 erforderlich ist. Sobald der Bluetooth-Adapter 2 abgezogen oder die Set-Top-Box 1 ausgeschaltet wurde, ist auch der steuerbare Schalter 18 geöffnet und die optionale zusätzliche Spannungsversorgung 8 wird nicht belastet, was besonders bei Verwendung von Batterien oder Akkus von Bedeutung ist.

In Betrieb gebracht, kann der Bluetooth-Adapter 2 nun die analogen Audiosignale 5a, 5b über den Analog-/DigitalWandler 19 digitalisieren, mittels geeignetem Audio-Codec 20 komprimieren und über das Bluetooth Steuer- und Sende/Empfangsmodul 11 und die Bluetooth-Antenne 9 zu einem geeigneten Endgerät übertragen.

Des Weiteren können von der Set-Top-Box 1 bereitgestellte Zusatzinformationen (Sendername, Titel, Interpret) über die bidirektionale serielle Verbindung 4, das Bluetooth Steuer- und Sende/Empfangsmodul 11 und die Bluetooth-Antenne 9 ebenfalls zu einem Endgerät übertragen werden.

Es lassen sich noch viele weitere Anwendungsfälle des Datenaustauschs, auch in der Gegenrichtung, definieren, die hauptsächlich durch die Programmsteuerungsmöglichkeiten in Set-Top-Box 1, Bluetooth-Adapter 2 und einem Endgerät bestimmt werden, jedoch am Wesen der vorliegenden Erfindung nichts ändern. So besteht die Möglichkeit, mittels am Endgerät vorhandener Tasten das Senden eines definierten Datenpakets über die zum Bluetooth-Adapter 2 bestehende Verbindung zum Bluetooth-Adapter 2 auszulösen. Infolgedessen kann dieser über die bidirektionale serielle Verbindung 4 einen Steuerbefehl zur Set-Top-Box 1 senden, was beispielsweise die Programmsteuerung der Set-Top-Box 1 veranlasst, einen Kanalwechsel durchzuführen.

### Bezugszeichenliste

- 1: Set-Top-Box/digitales Fernsehempfangsgerät
- 2: Bluetooth-Adapter/spezielles externes Gerät
- 3: SCART-Verbindung der Set-Top-Box
- 3': SCART-Verbindung des externen Gerätes
- 4: SCART-Kontakte/Leitungen benutzt für die asynchrone, bidirektionale serielle Kommunikation, davon
- 4a, 4a': für das Senden (Tx)
- 4b, 4b': für das Empfangen (Rx)
- 5: SCART-Kontakte/Leitungen benutzt für analogen Audio/Video-Ausgangssignale der Set-Top-Box, davon
- 5a: Audio rechts
- 5b: Audio links
- 6: SCART-Kontakte/Leitungen benutzt für die Signalisierung des Zustands "betriebsbereit" des externen Gerätes
- 7: SCART-Kontakte/Leitungen benutzt für die Erkennung ob ein externes Gerät angeschlossen ist und für Zuführung elektrischer Energie von der Set-Top-Box zum externen Gerät
- 8: optionale zusätzliche Spannungsversorgung für das externe Gerät
- 9: Daten/Steuer-Interface des externen Gerätes, beispielsweise in Form einer Bluetooth-Antenne
- 10: Standardelektronik der digitalen Set-Top-Box
- 11: Bluetooth Steuer- und Sende/Empfangsmodul
- 12: steuerbarer Schalter
- 13: Referenzwiderstand R_{R}
- 14: Detectionswiderstand R_{D}
- 15: Fensterkomparator
- 16: Pulldown-Widerstand R_{P}
- 17: Torschaltung
- 18: steuerbarer Schalter
- 19: Analog/Digital-Wandler für Audio-Signale
- 20: Audio-Codec/Komprimierungseinrichtung
- 21: Signaleingang "externes Gerät ist angeschlossen"
- 22: von der Betriebsspannung der Set-Top-Box abgeleitete definierte Gleichspannung
- 23: Signalausgang "Betriebsspannung bereitstellen"
- 24: digitalisiertes und komprimiertes Audiosignal
- 25: Masse
- 26: Signaleingang "externes Gerät ist betriebsbereit"

## Patentansprüche

1. Verfahren zur Funktionserweiterung von digitalen Fernsehempfangsgeräten, insbesondere von Set-Top-Boxen für den Empfang digitaler Fernseh- und Rundfunkprogramme, **dadurch gekennzeichnet, dass** eine SCART-Verbindung (3) des digitalen Fernsehempfangsgerätes (1) so modifiziert wird, dass zwei oder mehr SCART-Kontakte (4) benutzt werden, um eine asynchrone bidirektionale serielle Kommunikation mit einem an der SCART-Verbindung (3) angeschlossenen speziellen externen Gerät (2) zu ermöglichen, wobei ein oder mehrere weitere SCART-Kontakte (7) benutzt werden, um das spezielle externe Gerät (2) mit elektrischer Energie in Form einer zuschaltbaren, nicht dauerhaft anliegenden elektrischen Spannung zu versorgen und mittels Generierung und Detektion definierter Spannungswerte an diesen SCART-Kontakten (7) zu erkennen, ob ein spezielles externes Gerät (2) angeschlossen ist, wobei weiterhin ein oder mehrere SCART-Kontakte (6) benutzt werden, um durch Detektion der jeweils anliegenden Spannungswerte zu erkennen, ob das spezielle externe Gerät (2) betriebsbereit ist, wobei die zuschaltbare elektrische Spannung erst dann in voller Höhe auf die entsprechenden SCART-Kontakte (7) zugeschaltet wird, wenn ein spezielles externes Gerät (2) erkannt wurde, wobei für den Fall, dass kein spezielles externes Gerät (2) angeschlossen ist, die übliche Funktion der SCART-Verbindung (3) beim Anschluss herkömmlicher Heimelektronik nicht beeinträchtigt wird.

2. Verfahren nach Anspruch 1, **dadurch gekennzeichnet, dass** für den Fall, dass die über die SCART-Verbindung (3, 3') bereitgestellte elektrische Energie nicht geeignet oder nicht ausreichend für den Betrieb des speziellen externen Gerätes (2) ist, das spezielle externe Gerät (2) über eine optionale zusätzliche Spannungsversorgung (8) mit elektrischer Energie versorgt wird.

3. Verfahren nach Anspruch 2, **dadurch gekennzeichnet, dass** die optionale zusätzliche Spannungsversorgung (8) ständig am speziellen externen Gerät (2) anliegt.

4. Verfahren nach Anspruch 2, **dadurch gekennzeichnet, dass** die optionale zusätzliche Spannungsversorgung (8) nur zugeschaltet wird, wenn dass spezielle externe Gerät (2) über die SCART-Verbindung (3, 3') mit der Set-Top-Box (1) verbunden ist und von dieser erkannt wurde.

5. Verfahren nach einem der Ansprüche 1 bis 4, **dadurch gekennzeichnet, dass** das spezielle externe Gerät (2) einen Analog/Digital-Wandler (19) verwendet, um die vom digitalen Fernsehempfangsgerät (1) über die SCART-Verbindung (3, 3') bereitgestellten analogen Audio- und/oder Video- Signale zu digitalisieren.

6. Verfahren nach Anspruch 5, **dadurch gekennzeichnet, dass** das spezielle externe Gerät (2) mittels einer Komprimierungseinrichtung (20) die Menge der Audio- und/oder Video-Daten reduziert.

7. Verfahren nach einem der Ansprüche 1 bis 6, **dadurch gekennzeichnet, dass** das spezielle externe Gerät (2) über ein drahtgebundenes oder drahtloses Daten/Steuer-Interface (9) die Audio- und/oder Videodaten an weitere Geräte weiterleitet.

8. Verfahren nach Anspruch 7, **dadurch gekennzeichnet, dass** Daten, die das digitale Fernsehempfangsgerät (1) über die für die asynchrone bidirektionale Kommunikation vorgesehenen SCART-Kontakte (4) an der SCART-Verbindung (3, 3') an das spezielle externe Gerät (2) sendet, über das Daten/Steuerinterface (9) an weitere Geräte weitergeleitet werden.

9. Verfahren nach einem der Ansprüche 7 oder 8, **dadurch gekennzeichnet, dass** Daten, die das spezielle externe Gerät (2) selbst generiert oder über das Daten/Steuerinterface (9) empfängt, über die für die asynchrone bidirektionale Kommunikation vorgesehenen SCART-Kontakte (4) an der SCART-Verbindung (3, 3') an das digitale Fernsehempfangsgerät (1) übertragen werden.

10. Verfahren nach einem der Ansprüche 7 bis 9, **dadurch gekennzeichnet, dass** der Datenaustausch mit weiteren Geräten über USB-, Ethernet-, Bluetooth- oder WLAN-Interface erfolgt.
